# DEMANDE DE BREVET EUROPEEN

(11) **EP 1 030 501 A1**
(43) Date de publication de la demande: **23.08.2000**
(21) Numéro de dépôt: 00400443.8
(22) Date de dépôt: 17.02.2000
(51) Int. Cl.: H04M 1/60

(54) **Poste téléphonique comprenant des moyens de correction auditive**

(30) Priorité: 19.02.1999 FR 9902124
(71) Demandeur: FRANCE TELECOM, 75015 Paris (FR)
(72) Inventeur: Mamalet, Franck, 94230 Cachan (FR); Petit, Eric, 94230 Cachan (FR); Laval, Jean-Paul, 94230 Cachan (FR); Bouget, Bertrand, 94230 Cachan (FR)
(74) Mandataire: Ballot, Paul

(57) **Abrégé**

L'invention concerne un poste téléphonique comprenant un dispositif de correction auditive numérique (10) comportant des moyens numériques pour diviser en fréquence (11) un signal téléphonique numérique (Xn) en un ensemble de sous-bandes, des moyens pour amplifier (12) ledit signal dans chacune de ces sous-bandes avec gain réglable en fonction de la correction souhaitée pour l'utilisateur et pouvant être distincte pour chaque sous-bande, des moyens (13) pour additionner les signaux des sous-bandes ainsi amplifiés et, des moyens (14) pour convertir le signal provenant de cette addition en un signal analogique corrigé pouvant être appliqué aux moyens acoustiques d'écoute (2) du téléphone, des moyens (60) pour coupler ledit poste téléphonique de manière inductive à une prothèse auditive (70) et des moyens (T) pour commuter la sortie du poste entre ces moyens de couplage et les moyens acoustiques d'écoute.

## Description

L'invention concerne un poste téléphonique comprenant des moyens de correction auditive.

On entendra dans toute la suite par poste téléphonique tout équipement téléphonique muni d'un écouteur placé dans un combiné. Il pourra s'agir de postes téléphoniques avec fil ou sans fils de radio téléphones ou de terminaux téléphoniques.

Il existe à ce jour des matériels téléphoniques destinés aux personnes malentendantes.

Le matériel proposé à ce jour à cette fin est constitué de postes téléphoniques munis d'une écoute amplifiée, d'un écouteur supplémentaire et d'une qualité sonore améliorée.

Il existe également dans le même but, des postes téléphoniques équipés d'un amplificateur supplémentaire et d'une bobine intégrée pour les prothèses auditives ayant la position « T ».

De tels postes sont fabriqués par la société Bang & Olufsen.

D'autres fabricants proposent, en plus du réglage de la puissance d'audition, un réglage grave/aiguë qui améliore la netteté. Un tel équipement est commercialisé par la société Dialatron, le modèle commercialisé étant référencé « Telaam2 ».

Une autre solution connue à ce jour et mise en oeuvre par la société Auriphone, consiste à effectuer une correction en dehors du téléphone. Pour cela, il est proposé un boîtier adaptable sur tous les téléphones réalisant une amplification et une égalisation du signal sonore. L'égalisation en fréquence est réalisée par trois filtres analogiques sur la bande 0-10kHz (équivalent à un réglage grave/aiguë dans la bande 300 à 3.400 Hz du réseau téléphonique commuté RTC), à l'aide de trois boutons sur le boîtier offrant un réglage annoncé de 25 dB maximum.

La présente invention permet de remédier à ces inconvénients.

Pour cela, la présente invention propose un poste téléphonique comprenant un dispositif de correction auditive numérique.

La présente invention a plus particulièrement pour objet un poste téléphonique, principalement caractérisé en ce qu'il comprend un dispositif de correction auditive numérique comprenant des moyens numériques pour diviser en fréquence un signal téléphonique numérique en un ensemble de sous-bandes, des moyens pour amplifier ledit signal dans chacune de ces sous-bandes avec un gain réglable en fonction de la correction souhaitée pour l'utilisateur et pouvant être distincte pour chaque sous-bande, des moyens pour additionner les signaux de sous-bandes ainsi amplifiés et, des moyens pour convertir le signal provenant de cette addition en un signal analogique corrigé pouvant être appliqué à des moyens acoustiques d'écoute du téléphone.

Selon une autre caractéristique, le poste téléphonique comprend des moyens pour mémoriser l'ensemble des gains affectés aux sous-bandes.

Selon une autre caractéristique, les moyens de mémorisation permettent de mémoriser plusieurs ensembles de gains adaptés à des utilisateurs différents et des moyens de sélection par l'utilisateur du poste de la configuration qui lui est adaptée.

Selon une autre caractéristique, le poste comprend des moyens pour le téléchargement des informations de configuration et notamment des gains.

Selon un mode de réalisation, les moyens pour le téléchargement sont adaptés pour fonctionner à partir des signaux téléphoniques entrant dans le poste.

Selon un autre mode de réalisation, les moyens pour le téléchargement comprennent des moyens pour obtenir les gains à partir d'un support extérieur.

Le support extérieur peut être réalisé par une carte à puce personnalisée, les gains de la correction auditive étant mémorisés sur cette carte.

Selon une autre caractéristique, le poste comprend des moyens pour limiter la puissance du signal analogique corrigé à une valeur correspondant à la limite de confort de l'utilisateur du poste.

Le poste comprend en outre des moyens pour le coupler de manière inductive à une prothèse auditive et des moyens pour commuter la sortie du poste entre ces moyens de couplage et les moyens acoustiques d'écoute.

Le poste comporte en outre des moyens pour inhiber le fonctionnement du dispositif de correction auditive numérique.

D'autres particularités, avantages et caractéristiques de l'invention apparaîtront à la lecture de la description qui est faite ci-après qui est donnée à titre d'exemple illustratif et non limitatif et en regard des dessins sur lesquels :
- la figure 1, représente le schéma d'un dispositif de correction auditive numérique pour poste téléphonique selon l'invention,
- la figure 2, représente un schéma détaillé du dispositif de correction auditive numérique selon l'invention,
- la figure 3, représente un schéma simplifié de la partie réception dans un poste téléphonique muni du dispositif de correction auditive numérique selon l'invention,
- la figure 4, représente le schéma simplifié d'un poste téléphonique dans sa partie réception en liaison avec des moyens de téléchargement selon un mode de réalisation particulier,
- la figure 5, représente le schéma détaillé des moyens de traitement 20,
- les figures 6A et 6B représentent des graphes de réponse fréquentielle suivant différentes configurations.

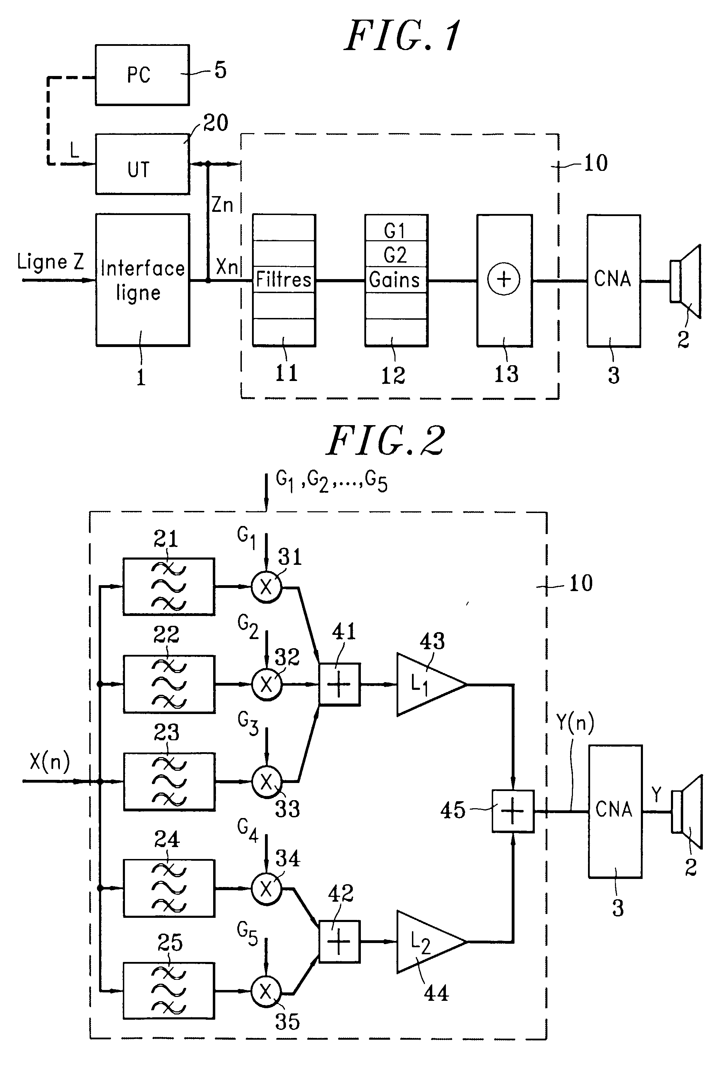

On va maintenant décrire l'invention à partir du schéma de la figure 1.

Le poste téléphonique est équipé d'un dispositif de correction auditive numérique portant la référence 10, ce dispositif étant placé entre l'interface de ligne 1 et les moyens acoustiques d'écoute du poste portant la référence 2. L'interface de ligne 1 est apte à effectuer l'adaptation d'impédance et la conversion analogique numérique.

Le poste téléphonique est également équipé d'une interface série L, pour être relié avec un terminal 5 de type PC.

Ce dispositif de correction auditive numérique, est implanté dans le poste téléphonique afin de compenser toute ou partie des déficiences auditives d'une personne malentendante durant une conversation téléphonique.

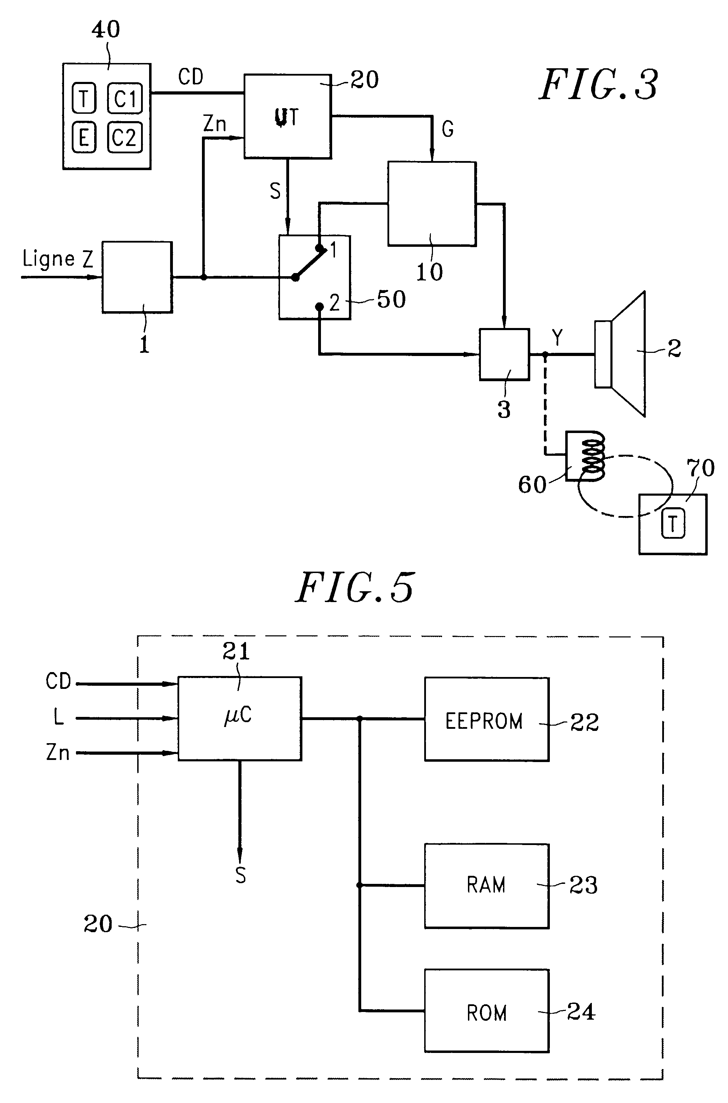

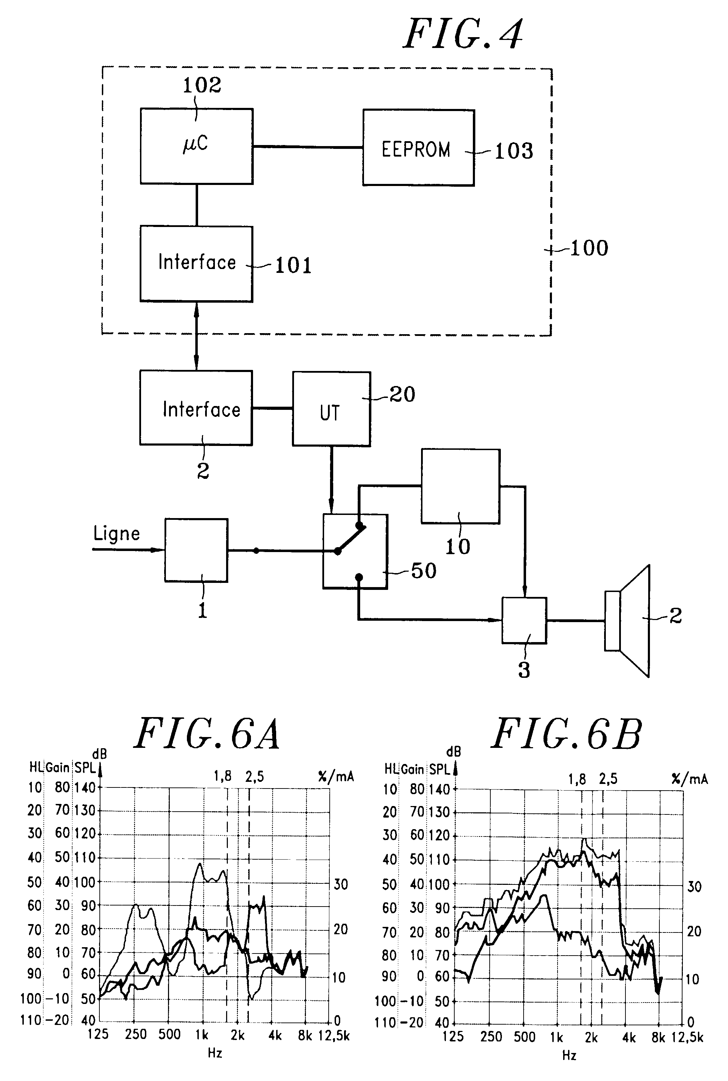

Comme on le verra à travers les différents modes de réalisation, notamment illustrés par les figures 3 et 4, ce dispositif s'adresse à des personnes atteintes de déficiences auditives légères et moyennes (60 dB de perte auditive), équipées ou non d'une prothèse auditive.

L'invention permet également à toute personne ayant une perception auditive normale, d'utiliser le poste téléphonique équipé d'une telle correction auditive.

Le dispositif 10 comporte un banc de filtres numériques portant la référence 11 recevant le signal téléphonique numérique Xn. Ce filtre est suivi d'un amplificateur 12 commandé en gain respectivement pour chacune des sous-bandes du filtre 11. L'amplificateur est suivi d'un additionneur-limiteur 13. Le signal est converti par un convertisseur numérique-analogique 3 qui est représenté à l'extérieur du dispositif de traitement 10 mais qui peut bien sûr être intégré sur la même puce électronique réalisant la fonction du dispositif 10.

Le principe de la correction auditive effectuée par le poste téléphonique ainsi équipé repose sur un égaliseur numérique à M bandes de fréquence auquel est associé, un jeu de M coefficients fixant l'amplification du filtre dans chacune des sous-bandes.

L'ensemble des coefficients pourra être mémorisé dans une table du poste téléphonique comme cela est décrit dans la suite.

On va maintenant décrire, à partir du schéma de réalisation illustré par la figure 2, un exemple de réalisation du dispositif de correction 10.

Selon cet exemple, le dispositif de filtrage 11 comporte 5 filtres passe-bande 21 à 25, chacun étant suivi d'un dispositif amplificateur à gain variable portant les références 31, 32, 33, 34, 35, dont les commandes en gain G1 à G5 sont données par l'unité de traitement 20 du poste téléphonique.

Le signal amplifié issu de chacune des sous-bandes est additionné par des additionneurs 41 et 42. Le signal de sortie de ces additionneurs 41 et 42 est limité par le dispositif de limitation par compression 43 et 44, dont les signaux de sortie sont additionnés par l'additionneur 45, pour former le signal corrigé Y(n) . Ce signal est ensuite converti en signal analogique pour pouvoir être entendu à partir du moyen acoustique d'écoute 2.

L'ensemble des coefficients G1-G5 de commande de gain est déterminé au préalable par le praticien audioprothésiste lors de la phase de réglage du dispositif comme cela a été précisé.

Il peut être prévu selon l'invention de mémoriser un ou plusieurs ensembles de coefficients propres à chaque utilisateur du poste.

En pratique, le praticien effectue son réglage depuis le terminal de type PC directement sur le patient en modifiant les paramètres de correction auditive (la fonction de transfert du filtre égaliseur).

Une connexion de type liaison série L entre le poste téléphonique et le terminal de type PC permet le chargement dans une mémoire non volatile du téléphone des paramètres de la correction auditive personnalisée.

Le régalage ainsi que le téléchargement de la ou des différentes configurations (notamment des coefficients de réglage) pourront se faire au travers du réseau téléphonique, si besoin au moyen d'un terminal de type PC relié à la ligne téléphonique Z.

Le système n'est donc pas réservé à un utilisateur unique puisque l'on peut enregistrer plusieurs configurations, dont celle d'une personne entendant normalement. La sélection d'une configuration plutôt qu'une autre pourra être faite à partir de touches du clavier du poste téléphonique comme l'illustre le schéma figure 3 clavier 40.

De plus, selon une variante de réalisation, on prévoit d'enregistrer la correction personnalisée d'un usager sur une carte à puce. Ceci va permettre à cet usager de disposer de la configuration qui le concerne sur tous les téléphones équipés de ce système de correction auditive et d'un lecteur de carte à puce.

Il est prévu, comme on l'a déjà dit, selon un mode de réalisation, de permettre le téléchargement d'un ou plusieurs ensembles de valeurs de gain de commande des amplificateurs qui sont en sortie du dispositif de filtrage, de manière à disposer dans le poste de valeurs de réglage du gain adaptées à un ou plusieurs utilisateurs du poste.

La figure 3 permet d'illustrer l'intégration d'un dispositif de correction numérique 10 dans un poste téléphonique selon la présente invention avec plusieurs variantes de réalisation.

Selon une variante de réalisation, il est prévu que le poste téléphonique puisse également servir à un utilisateur qui n'aurait pas besoin du dispositif de correction.

Pour cela, il est prévu une fonction d'inhibition symbolisée par un commutateur 50 sur les schémas des figures 3 et 4. Ainsi lorsque l'utilisateur a au préalable sélectionné la touche qui lui est réservée pour signaler qu'il est normo-entendant, le fonctionnement dudit dispositif de correction 10 est inhibé. En pratique, l'unité de traitement 20 mettra tous les gains à un.

Dans ce cas, l'unité de traitement 20 reconnaîtra la touche de sélection réservée à cet effet, (par exemple la touche portant la référence E sur le schéma de la figure), et enverra un signal de commande permettant de passer le commutateur de la position 1 à la position 2, le signal voix transporté par ligne allant vers les moyens acoustiques d'écoute 2.

On prévoit aussi selon une autre variante de l'invention, un combiné téléphonique équipé d'une bobine à induction 60 et d'un commutateur électrique pour passer du mode écouteur (transmission par voie acoustique) au mode induction pour les personnes équipée d'une prothèse auditive 70 avec bobine (position « T »).

Dans ce cas, la transmission se fait par couplage électromagnétique entre la bobine 60 du combiné et celle de la prothèse auditive 70. Ce mode permet à l'usager de converser normalement sans être gêné par les bruits de fond, en écartant par ailleurs le risque de l'effet Larsen en cas de forte amplification du signal.

Une autre variante de réalisation concerne un premier mode de réalisation pour le téléchargement de la configuration.

Selon ce premier mode de réalisation (toujours illustré sur cette figure 3), le téléchargement peut être réalisé directement à partir de la ligne téléphonique Z, au moyen par exemple d'un terminal de type compatible PC qui serait relié audit poste téléphonique par la ligne Z.

Ce même terminal (non représenté) peut servir à effectuer le réglage à distance des gains (des paramètres de correction auditive) dans le cas ou le patient n'est pas proche d'un ordinateur PC comme l'illustre la figure 1.

On va maintenant décrire le dispositif en rapport avec la figure 4.

Cette figure permet d'illustrer un deuxième mode de réalisation consistant à télécharger les paramètres de commandes de gain au moyen d'un dispositif de téléchargement, portant la référence 100 sur la figure 4. Ce dispositif 100 se présente sous la forme d'un support de mémorisation de type carte à puce.

Pour cela, le poste téléphonique sera équipé d'une interface 2 adaptée à la connexion avec un tel support de mémorisation 100.

L'interface 2 peut être soit le dispositif complet de lecture et d'écriture d'une carte à puce, soit simplement la fente d'insertion d'un lecteur de carte à puce muni de plots de contacts, l'ensemble des fonctions lecture-écriture pouvant être réalisé par l'unité de traitement du poste téléphonique 20.

La carte à puce 100 comprendra de préférence une interface d'entrée-sortie 101 au format ISO reliée à une unité de traitement de type microprocesseur 102 associée à une mémoire électriquement programmable 103 de type EEPROM. C'est dans cette mémoire 103 que seront chargés les paramètres de réglage de gain de l'utilisateur de la carte.

Ainsi selon différents modes de réalisation, le système sera réglé par un spécialiste de l'audition lors de la mise en service. Le système qui vient d'être décrit permet de mémoriser plusieurs réglages (ou configurations) différents dans le cas de plusieurs utilisateurs du poste téléphonique.

Comme cela a été décrit, la sauvegarde de la configuration Zn (les gains associés aux sous-bandes et le niveau nominal de puissance envoyé sur l'écouteur) s'effectue soit dans la mémoire interne du téléphone, soit sur une carte à puce associée à un lecteur permettant de lire le contenu de la mémoire de cette carte.

Sur la figure 5 on a représenté un exemple de réalisation d'une unité de traitement 20 présente dans un poste téléphonique.

Cette unité de traitement va comporter un processeur 21 de type microcontrôleur relié à une mémoire de programme 24 de type mémoire ROM, à une mémoire de programme et/ou de données électriquement programmable 22 de type EEPROM et à une mémoire de travail 23 de type RAM. Le microcontrôleur est apte à interpréter les commandes CD du clavier du poste téléphonique, à envoyer un signal de commande S au commutateur 50 et à envoyer des signaux de commande de gain G au dispositif de correction auditive 10 et apte à gérer l'interface série avec le PC et apte à gérer le téléchargement des gains de la correction auditive Zn.

Pour cela, le microcontrôleur comportera dans sa mémoire de programme ROM, le programme correspondant lui permettant d'aller lire dans la mémoire 22 les paramètres de commande de gain qui auront été mémorisés, pour les transmettre au dispositif 10 en fonction des commandes de sélection qu'il reçoit à partir du clavier 40 et de la configuration adaptée à ces commandes ou choisie par défaut.

Ainsi, la présente invention permet :
- d'apporter un meilleur confort d'écoute téléphonique à des personnes atteintes de déficiences auditives légères et moyennes ;
- de proposer un traitement numérique performant et personnalisé de la déficience auditive (jusqu'à 50 dB de correction) au niveau du téléphone est sur toute la bande utile du téléphone ;
- d'ouvrir à l'usager grâce à l'emploi de la carte à puce la possibilité de changer, de charger la configuration sur tous systèmes intégrant ce concept ;
- de proposer un équipement téléphonique spécifique et son interface homme-machine pour le réglage de la correction auditive par le praticien audioprothésiste, distributeur du produit ;
- de répondre à un besoin fort (on montre que 10 % de la population souffre de problèmes auditifs).

Un téléphone prototype intégrant un processeur numérique de signal (DSP) a été développé par le déposant. L'algorithme de la correction auditive a pu être implanté dans ce téléphone, ce qui a permis d'effectuer les premiers tests.

Les deux graphes illustrés par les figures 6A et 6B ont été réalisés dans le laboratoire d'un audioprothésiste sur une chaîne de mesures pour prothèses auditives.

Afin d'utiliser cette chaîne de mesures, l'écouteur du téléphone a été remplacé par un écouteur de prothèse auditive. Ce dernier est couplé au microphone étalon de la chaîne au travers d'une petite cavité étanche qui réalise l'adaptation d'impédance acoustique (le volume d'air correspond à celui du conduit auditif de l'oreille humaine).

La prise de son est réalisée dans une chambre anéchoïque par un microphone directement relié au téléphone (le réseau téléphonique est absent) placé à quelques centimètres du haut-parleur de la chaîne. Celui-ci génère le signal d'excitation, en l'occurrence, un signal de type bruit blanc (spectre uniforme dans la bande) de puissance environ 60 dB.

Les deux graphes figures 6A et 6B montrent la réponse fréquentielle d'amplitude (en dB) de l'ensemble : microphone - correction auditive - couplage écouteur/microphone, étalon, au signal d'excitation, dans le cas de configurations différentes : illustrées par les tableaux A et B ci-dessous annexés à la description.

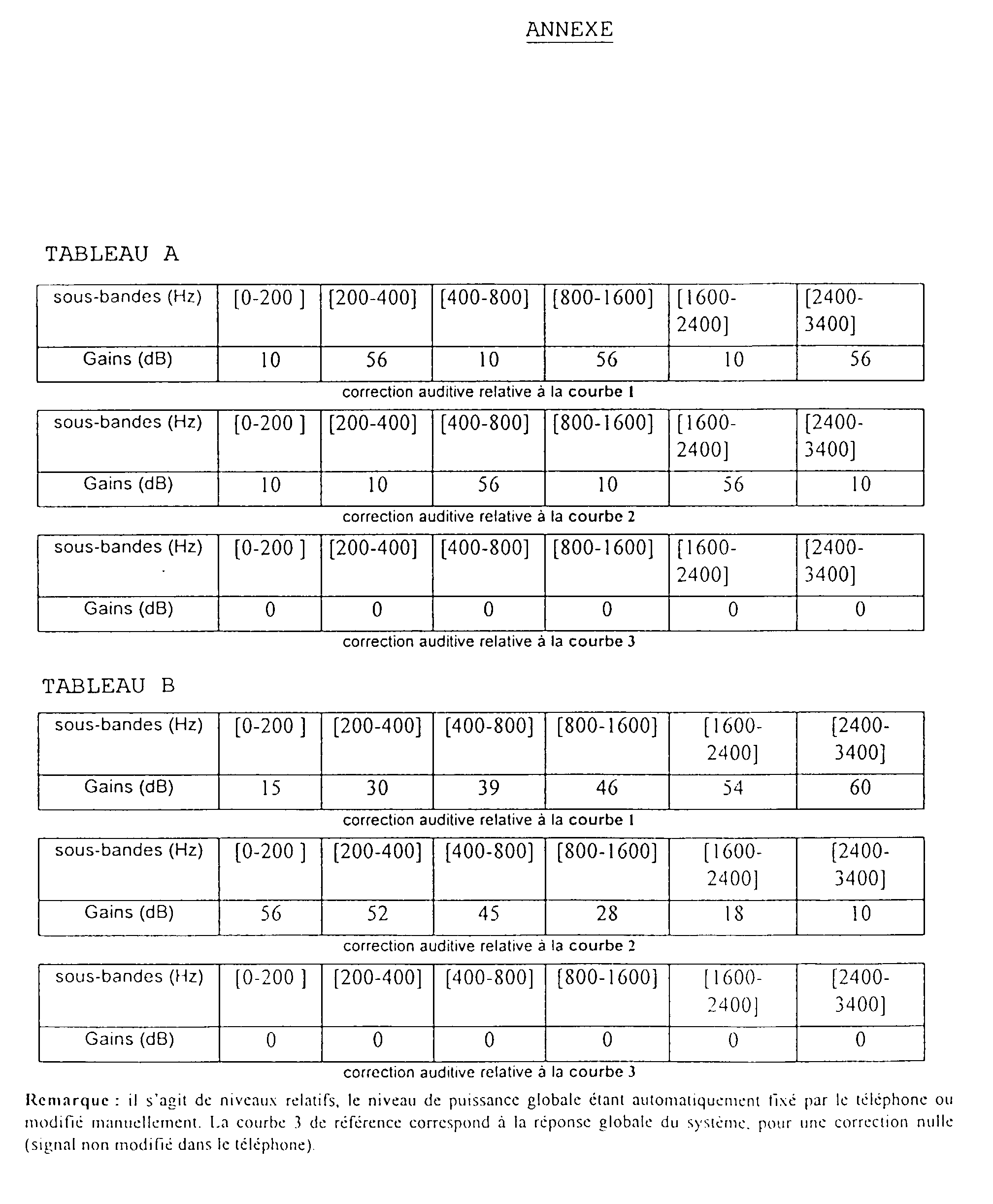

## Revendications

1. Poste téléphonique caractérisé en ce qu'il comprend un dispositif de correction auditive numérique (10) comprenant des moyens numériques pour diviser en fréquence (11) un signal téléphonique numérique (Xn) en un ensemble de sous-bandes, des moyens pour amplifier (12) ledit signal dans chacune de ces sous-bandes avec gain réglable en fonction de la correction souhaitée pour l'utilisateur et pouvant être distincte pour chaque sous-bande, des moyens (13) pour additionner les signaux des sous-bandes ainsi amplifiés, des moyens (14) pour convertir le signal provenant de cette addition en un signal analogique corrigé pouvant être appliqué aux moyens acoustiques d'écoute (2) du téléphone, des moyens (60) pour coupler ledit poste téléphonique de manière inductive à une prothèse auditive (70) et des moyens (T) pour commuter la sortie du poste entre ces moyens de couplage et les moyens acoustiques d'écoute.

2. Poste téléphonique selon la revendication 1, caractérisé en ce qu'il comprend des moyens pour mémoriser (22) l'ensemble des gains affectés aux sous-bandes.

3. Poste téléphonique selon la revendication 2, caractérisé en ce que ces moyens de mémorisation (22) permettent de mémoriser plusieurs ensembles de gains adaptés à des utilisateurs différents et des moyens de sélection par l'utilisateur du poste, de la configuration qui lui est adaptée.

4. Poste téléphonique selon l'une quelconque des revendications 1 à 3, caractérisé en ce qu'il comprend des moyens pour télécharger (20) des informations de configuration (Zn) et notamment des gains.

5. Poste téléphonique selon la revendication 4, caractérisé en ce que les moyens pour le téléchargement (20) sont adaptés pour fonctionner à partir des signaux téléphoniques entrant dans le poste.

6. Poste téléphonique selon l'une quelconque des revendications 1 à 5, caractérisé en ce que les moyens de téléchargement (20) comprennent des moyens pour obtenir les gains à partir d'un support extérieur (100) et des moyens pour régler les paramètres et pour télécharger les coefficients de réglage.

7. Poste téléphonique selon la revendication 6, caractérisé en ce que les moyens (2, 20) pour obtenir les gains sont adaptés pour fonctionner à partir d'une carte à puce.

8. Poste téléphonique selon l'une quelconque des revendications précédentes, caractérisé en ce qu'il comprend des moyens (43, 44) pour limiter la puissance du signal analogique corrigé à une valeur correspondant à la limite de confort de l'utilisateur du poste.

9. Poste téléphonique selon l'une quelconque des revendications précédentes, caractérisé en ce qu'il comporte des moyens (50) pour inhiber le fonctionnement de correction auditive numérique (10).
